(19) Europäisches Patentamt
European Patent Office
Office européen des brevets

(11) Veröffentlichungsnummer: **0 224 846**
**B1**

(12) **EUROPÄISCHE PATENTSCHRIFT**

(45) Veröffentlichungstag der Patentschrift: **03.10.90**

(21) Anmeldenummer: **86116327.7**

(22) Anmeldetag: **25.11.86**

(51) Int. Cl.$^5$: **A 01 N 25/04,** A 01 N 25/30, B 01 F 17/14

# (54) Neue wässrige Pflanzenschutzmittel-Emulsionen.

(30) Priorität: **30.11.85 DE 3542439**

(43) Veröffentlichungstag der Anmeldung:
**10.06.87 Patentblatt 87/24**

(45) Bekanntmachung des Hinweises auf die Patenterteilung:
**03.10.90 Patentblatt 90/40**

(84) Benannte Vertragsstaaten:
**AT BE CH DE FR GB GR IT LI NL**

(56) Entgegenhaltungen:
**EP-A-0 118 759**
**US-A-4 220 611**

(73) Patentinhaber: **HOECHST AKTIENGESELLSCHAFT**
**Postfach 80 03 20**
**D-6230 Frankfurt am Main 80 (DE)**

(72) Erfinder: **Albrecht, Konrad, Dr.**
**Sodener Strasse 64**
**D-6233 Kelkheim (Taunus) (DE)**
Erfinder: **Heinrich, Rudolf, Dr.**
**Taunusstrasse 19**
**D-6233 Kelkheim (Taunus) (DE)**
Erfinder: **Schumacher, Hans, Dr.**
**Claudiusstrasse 4**
**D-6093 Flörsheim am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Es ist bekannt und in EP—A—47 396 beschrieben, lagerstabile konzentrierte Emulsionen von herbizidwirkenden Phenoxyalkancarbonsäureestern auf wäßriger Basis unter Verwendung esterlöslicher Emulgatoren und wasserlöslicher Dispergatoren herzustellen. Als esterlösliche Emulgatoren dienen, gegebenenfalls in Mischung mit Alkylarylsulfonaten, Fettsäurepolyethylenglykolester, Polyethylenglykolether von Fettalkoholen, von Glyzeriden oder von Alkylphenolen sowie Polyoxyethylen- und Polyoxypropylenblockpolymere. Als Dispergatoren dienen phospatierte Alkylarylpolyethylenoxide, die Ammonium-, Natrium- oder Kaliumsalze von phosphoryliertem Polystyrylphenylpolyethylenoxid oder Ethylenoxid-Kondensate von Fettaminen.

Die Mengen der zugesertzten öllöslichen Emulgatoren liegen zwischen 1,01 und 11,1 Gew.-Tl. pro 100 Gew.-Tl. Phenoxyalkancarbonsäureester. Die Mengen an Dispergatoren betragen 0,5 bis 5 Gew.-Tl. pro 100 Gew.-Tl. wäßriger Lösung. Zur Vermeidung der dabei auftretenden Schaumbildung werden Antischaummittel auf Basis langkettiger Alkohole und Silikone zugesetzt.

Versuche, die Verwendung der oben aufgeführten wasserlöslichen Ammonium-, Natrium- oder Kaliumsalze der phosphorylierten Alkylarylpolyethylenoxide auf andere als in EP—A—47 396 erwähnten Wirkstoffe auszudehnen, führen zu erheblichen anwendungstechnischen Problemen. Bei Lagerversuchen über 3 Monate bei 50°C treten bei einer Reihe von Zubereitungen Entmischungserscheinungen auf, die nur bedingt reversibel sind.

Ähnliche Probleme werden mit den in EP—A—33 291 beschriebenen phosphorylierten Polystyrylphenylpolyäthylenoxiden beobachtet; ebenso lassen sich mit in der DE—A—3111 934 beschriebenen Alkylarylpolyglykoläther-Verbindungen nur bedingt wärmestabile kolloidale Emulsionen erhalten.

In der EP—A—118759 wird ferner beschrieben, daß endständig monophosphorylierte Ethylenoxid-Propylenoxid-Ethylenoxid-Block-Copolymerisate oder deren Salze als Dispergiermittel eingesetzt werden können, um wäßrige Pestizidformulierungen zu erhalten.

Aus der US—A—4,220,611 sind oberflächenaktive und emulgierende Verbindungen bekannt, die minidestens zwei über eine Polyoxalkylenkette verbunden Phosphatestergruppen mit $C_8$—$C_{13}$-Fettalkylresen in der Alkoholkomponente der Phosphatestergruppen enthalten. Diese Verbindungen sind unter anderem als mögliche Emulgatoren für oranische Lösungsmittel in wäßrigen Systemen oder für Formulierungen von DDT beschrieben.

Überraschenderweise wurde nun gefunden, daß bestimmte, in Wasser *und* organischen Lösungsmitteln lösliche Netz- und Dispergiermittel im Vergleich zu den in EP—A—47396 beschriebenen wasserlöslichen Dispergatoren vom Typ der phosphorylierten Alkylarylpolyäthylenoxide sowie im Vergleich mit den in EP—A—118759 beschriebenen endständig einfach phosphorylierten Ethylenoxid-Propylenoxid-Ethylenoxid-Blockcopolymerisaten vorteilhaft einsetzbar sind.

Gegenstand der vorliegenden Erfindung sind daher Pflanzenschutzmittel auf der Basis von wäßrigen Emulsionen, die einen oder mehrere Wirkstoffe enthalten, dadurch gekennzeichnet, daß sie als Dispergiermittel ein Blockcopolymerisat der Formel I

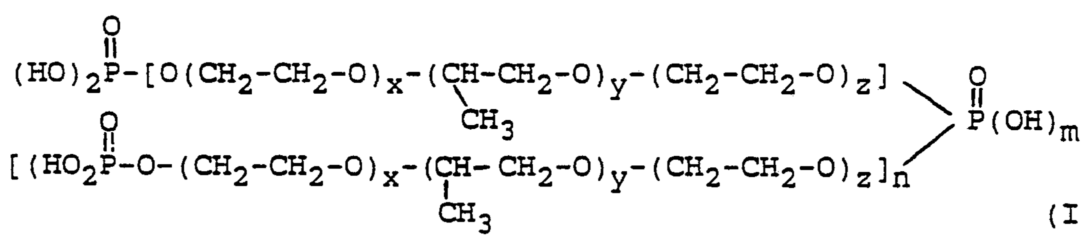

(I)

worin x und z unabhängig voneinander eine Zahl von 30 bis 10, y eine Zahl von 2 bis 200 und m, n = 0, 1 oder 2 bedeuten, wobei die Summe n + m = 2 sein muß, enthalten.

Als Salze kommen insbesondere die Alkali-, Erdalkali-, Ammonium-, Mono-, Di- oder Trialkylammonium- oder Mono-, Di- oder Trialkanolammoniumsalze infrage. Diese besitzen insbesondere 1 bis 5 C-Atome im Alkyl-bzw. Alkanolteil.

Die erfindungsgemäßen Zubereitungen sind weitgehend frei von oranischen Lösungsmitteln und anorganischen Salzen. Sie sind daher gefahrlos zu handhaben, insbesondere bei Transport und Lagerung. Durch Variation des Polyäthylenglykol-Anteils läßt sich die gewünschte Viskosität der fertigen Zubereitung problemlos einstellen, so daß auf die sonst üblichen Dispergier- und Verdickungsmittel verzichtet werden kann.

Bevorzugt besitzen x und z gleiche Bedeutung; y bedeutet insbesonderer eine Zahl von 20 bis 100 und n = insbesondere 0. Diese Blockpolymere können als Gemische eingesetzt werden. Ihre Herstellung wird in JP—A—7247982 oder in DE—A—3542441 beschrieben.

Die erfindungsgemäßen Formulierungen können zusätzlich noch Antigefriermittel enthalten. Hierzu zählen beispielsweise Ethylenglykol, Propylenglykol, Butandiol, Harnstoff, Glycerin, Polyethylenglykole und Polypropylenglykole. Ferner können sie weitere Formulierungshilfsmittel wie übliche Dispergiermittel,

Emulgatoren, Verdicker und — insbesondere für feste Wirkstoffe — auch geringe Bestandteile organischer Lösungsmittel enthalten.

Es können für diee Zubereitungen insbesondere solche Wirkstoffe eingesetzt werden, die sich aufgrund ihre niedrigen Schmelzpunktes nur schlecht oder gar nicht mit Hilfe von Mahlvorrichtungen in eine feindisperse wäßrige Phase überführen lassen ode auch solche Wirkstoffe, bei denen der Mahlvorgang besondere Sicherheitsvorkehrungen erfordert.

Als einzusetzende Pflanzenschutzmittelwirkstoffe kommen Herbizide, Insektizide, Akarizide, Nematizide, Pheromone oder Repellents in Betracht, wobei diese in Wasser nicht oder nur in geringem Maße löslich sein sollen. Feste Wirkstoffe sollen jedoch eine gute bis sehr gute Löslichkeit in einem der unten genannten organischen Lösungsmittel aufweisen.

Geeignete herbizide Wirkstoffe sind beispielsweise Phenoxyphenoxy- oder Heteroaryloxyphenoxy-propionsäurealkylester wie α-4-(2′,4′-Dichlorphenoxy)-phenoxy-propionsäuremethylester [common name: Diclofopmethyl] (A), Ethyl-2-[4-(6-chlor-2-benthiazolyl-oxy)phenoxy]-propionat (B) oder Ethyl-2-[4-(6-chlor-2-benzoxazolyl-oxy)-phenoxy]-propionat (common name: Fenoxapropethyl) (C), Dinitroanilinverbindungen wie 2,6-Dinitro-4-trifluormethyl-N,N-dipropylanilin [common name: Trifluralin] (D) oder 2,6-Dinitro-4-isopropyl-N,N-dipropylanilin [common name: Isopropalin] (E), Hydroxybenzonitrilderivate wie 2,6-Dibrom-4-hydroxy-benzonitriloctanoat (F), Dinitrophenolverbindungen wie 2-sec. Butyl-4,6-dinitrophenol [common name: Dinoterb] (G).

Geeignete Insektizide sind beispielsweise 1,4,5,6,7,7-Hexachlor-8,9,10-trinorborn-5-en-2,3-ylendimethyl-sulfit [common name: Endosulfan], 2-(1-Methyl-n-propyl)-4,6-dinitro-phenyl-2-methyl-crotonat [common name: Binapacryl], Phosphorsäureeste wie 0,0-Diethyl-0-1-phenyl-1H-1,2,4-triazol-3-yl-phosphor-thioat [common name: Triazophos] oder Pyrethroide wie (S)-α-Cyano-3-phenoxybenzyl (1R, 3R)-3-(2,2-dibromovinyl)-2,2-dimethylcyclopropanecarboxylat [common name: Deltamethrin].

Als geeignetes Fungizid ist beispielsweise zu nennen Ethyl-2-diethoxythiophorphoryloxy-5-methyl-pyrazolo [1,5 a] pyrimidin-6-carboxylat [common name: Pyrazophos], ferner als Pheromon die Verbindungen (E)-8-(E)-10-Dodecadienol oder (Z)-7,8-Epoxy-2-methyl-octadecan und als Repellent Phthalsäuredimethylester.

Die obengenannten Herbizide sind mit Ausnahme der Verbindungen (B) und (C), die Insektizide sowie das Repellent aus H. Martin, Pesticide Manual 6th edition 1979, bekannt. Die Herbizide B) und C) sind in DE—A—2 640 730, die beiden Pheromone ini M. Beroza, Chem. Controlling Insect Behaviour, Academic Press, N.Y. 1970 beschrieben.

Gegebenenfalls einzusetzende übliche Dispergiermittel sind vorzugsweise Lignosulfonate, Na-Salze von Dinaphthylmethandisulfonsäuren, das Na-Salz einer Sulfonsäure aus Kresol, Formaldehyd, Na-Sulfit und Oxynaphthalinsulfonsäure, das Na-Salz einer Sulfonsäure aus m-Kresol, Formaldehyd und Na-Sulfit, Kondensationsprodukte aus Arylsulfonsäuren und Formaldehyd-Na-Salzen, Triäthanolaminsalze von phosphorylierten Polystyrylphenylpolyethylenoxiden, Polyvinylalkohol, Dodecylbenzolsulfonsaures Calcium sowie Alkylnaphthalinsulfonate unterschiedlicher Alkylkettenlänge.

Geeignete Emulgatoren sind nichtionische, anionische oder kationische oberflächenaktive Stoffe, wobei vorwiegend Mischungen von nichtionischen mit anionischen Komponenten verwendet werden. Verwendbar sind abe auch Kombinationen aus nichtionischen und kationischen oberflächenaktiven Mitteln. Zu den bevorzugt eingesetzten Emulgatoren gehören Phenylsulfonat-Calcium, ethoxylierte Nonylphenole, ethoxylierte aliphatische Alkohole, ethoxyliertes Rizinusöl, Fettsäurepolyglykolester, Propylenglykol-Ethylenglykol-Blockpolymerisate sowie Gemische derselben.

Als Verdickungsmittel können wasserlösliche Polymere, wie z.B. Polyvinylalkohol, Polyvinylpyrrolidon und Cellulose-Derivate verwendet werden.

Als organische Lösungsmittel eignen sich alle mit Wasser nicht mischbaren Lösungsmittel, z.B. Aromaten, wie Toluol, Xylole, 1/2 Methylnaphthalin, Dimethylnaphthaline, Aliphaten wie Paraffinöle, pflanzliche Öle, Alicyclen wie Cyclohexan, Alkanole wie Cyclohexanol, i-Octylalkohol, Ethe wie Diethylether, Keton wie Cyclohexanon, 4-Methylcyclohexanon, Isophoron, Ester wie Essigsäureethylester und Tri-n-butylphosphat.

Die erfindungsgemäßen Pflanzenschutzmittel enthalten insbesondere 5—60 Gew.-% Wirkstoff, 10—90 Gew.-% , bevorzugt 15—40 Gew.-% Wasser und 0,5—20 Gew.-% , bevorzugt 1—10 Gew.-%, einer Verbindung der Formel I oder deren Salze und übliche Zusatzstoffe, gegebenenfalls 5 bis 50 Gew.-% eines Antigefriermittels und/oder 1—10 Gew.-% eines Dispergiermittels und/oder 1—15 Gew.-% eines Emulgators und/oder 1—10 Gew.-% eines Verdickungsmittels und/oder 1 bis 30 Gew.-% eines organischen Lösungsmittels.

Gegenstand der Erfindung ist ferner ein Verfahren zur Herstellung der erfindungsgemäßen Mittel. Hierzu werden die obengenannten Komponenten in den erforderlichen Mengen bei Temperaturen zwischen 0° und 60°C, zweckmäßigerweise bei Raumtemperatur, in einer Zone hoher Turbulenz gerührt oder auch geschüttelt, bis sich die gewünschte stabile Emulsion gebildet hat; hierbei sollen Teilchendurchmesser von vorzugsweise 1—15 µm eingestellt werden.

Zur praktischen Durchführung des Verfahrens wird zunächst die wäßrige Phase (Trägerphase) durch Einrühren der Di-oder Polyole und des Dispergiermittels in Wasser hergestellt. Danach wird der zu emulgierende Wirkstoff mit dem Emulgator-Anteil versetzt und in der wäßrigen Phase fein dispergiert. Bei Wirkstoffen mit einem Schmelzpunkt von ca. 0°C und darüber kann es erforderlich sein, konzentrierte

Lösungen desselben in einem oder mehreren der obengenannten organischen Lösungmittel hezustellen und diese nach Zusatz von Emulgatoren und gegebenenfalls Stabilisatoren in der wäßrigen Phase zu dispergieren.

Das Dispergiermittel kann aber auch zuerst dem Wirkstoff zugemischt werden und dann zusammen mit diesen in die wäßrige Phase eindispergiert werden.

Das Dispergieren kann durch einen Rühr- oder gegebenenfalls auch Schüttelvorgang erfolgen und wird zweckmäßigerweise so lange fortgesetzt, bis die organische Phase der gewünschten Tröpfchengröße entspricht. Zu empfehlen ist ein Tröpfchendurchmesser von 1—15 µm. Der Dispergiervorbang wird zweckmäßigerweise bei Raumtemperatur durchgeführt, kann aber auch in der Kälte oder bei erhöhten Temperaturen erfolgen.

Die folgenden Beispiele sollen die vorliegende Erfindung näher erläutern.

## FORMULIERUNGSBEISPIELE

### Beispiel 1

36 Gew.-% 2-(4-(2',4'-Dichlorphenoxy)-phenoxy)-propionsäuremethylester werden unter Rühren in 18 Gew.-% Xylol bei 20—25°C gelöst und mit 6 Gew.-% Fettsäurepolyglykolester (mit 40 AeO) versetzt. In 28 Gew.-% Wasser werden ebenfalls bei Raumtemperatur 2 Gew.-% des Kaliumslazes des phosphorylierten Ethylenoxid-Propylenoxid-Ethylenoxid-Blockpolymerisates der obengenannten Formel I, N = 0 (mit einem Anteil von 68% Ethylenoxid im Endprodukt) gelöst und danach mit 10 Gew.-% Ethylenglykol versetzt. Zu dieser wässrigen Phase läßt man unter starkem Rühren mit einem Flügelrührer langsam die obengenannte organische Phase fliessen und rührt die entstandene weiße Emulsion noch ca. 15 Minuten nach. Eine Probe wird 3 Monate bei 50°C, eine andere die gleiche Zeit bei −10°C gelagert. Die Zubereitung ist sowohl chemisch als auch anwendungstechnisch stabil.

### Beispiel 2

32,3 Gew.-% Endosulfan techn. werden unter Rühren in 21 Gew.-% eines Aromaten-Gemisches (Siedebereich 219°C—282°C) gelöst und mit 4 Gew.-% des Diethanolamin-Salzes des phosphorylierten Ethylenoxid-Propylenoxid-Ethylenoxid-Blockcopolymerisates der obengenannten Formel I (mit einem Anteil von 55% Ethylenoxid im Endprodukt) versetzt. In 34,7 Gew.-% Wasser werden bei Raumtemperatur 8 Gew.-% Glycerin gelöst. Dazu läßt man unter starkem Rühren langsam die organische Phase fließen und rührt die entstandene beige-farbene Emulsion noch ca. 15—20 Minuten nach.

Die Zubereitung ist chemisch und anwendungstechnisch stabil.

### Beispiel 3

30 Gew.-% Ethyl-2-diethoxythiophosphoryloxy-5-methylpyrazolo [1,5 a] pyrimidin-6-carboxylat (Pyrazophos) werden unter Rühren in 18 Gew.-% Xylol bei 20—25°C gelöst und mit 6 Gew.-% Fettsäurepolyglykolester (mit 40 AeO) versetzt. In 32 Gew.-% Wasser werden ebenfalls bei Raumtemperatur 4 Gew.-% des Kaliumsalzes des phosphorylierten Ethylenoxid-Propylenoxid-Ethylenoxid-Blockopolymerisates der obengenannten Formel I, n = o (mit einem Anteil von 50% Ethylenoxid im Endprodukt) gelöst und danach mit 10 Gew.-% Ethylenglykol versetzt. Zu dieser wäßrigen Phase läßt man unter starkem Rühren mit einem Flügelrührer langsam die obengenannte organische Phase fließen und rührt die entstandene weiße Emulsion noch ca. 15 Minuten nach. Eine Probe wird 3 Monate bei 50°C, eine andere die gleiche Zeit bei −10°C gelagert. Die Zubereitung ist sowohl chemisch als auch anwendungstechnisch stabil.

### Beispiel 4

In 49 Gew.-% Wasser werden 6,0 Gew.-% Fettsäurepolyglykolester (36 AeO), 3 Gew.-% der freien Säure des phosphorylierten Ethylenoxid-Propylenoxid-Ethylenoxid-Blockcopolymerisates der obengenannten Formel I (mit einem Gesamtanteil von 40% Ethylenoxid) und 10 Gew.-% Glycerin gelöst. Dazu läßt man unter starkem Rühren 32,0 Gew.-% (E)-8-(E)-10-Dodecadienol fließen. Die dabei entstehende weiße Emulsion wird noch 15 bis 20 Minuten nachgerührt.

Die Zubereitung ist chemisch anwendungstechnisch stabil.

### Beispiel 5

30,0 Gew.-% Endosulfan techn. werden unter Rühren in 21 Gew.-% eines Aromaten-Gemisches (Siedebereich 219°C — 282°C) gelöst und mit 3 Gew.-% der freien Säure des phosphorylierten Ethylenoxid-Propylenoxid-Ethylenoxid-Blockcopolymerisates de obengenannten Formel I (mit einem Anteil von 55% Ethylenoxid im Endprodukt) gelöst. In 34,0 Gew.-% Wasser werden bei Raumtemperatur 12 Gew.-% Polyethylenglykol (MG 1000) gelöst. Dazu läßt man unter starkem Rühren langsam die organische Phase fließen und rührt die entstandene beige-farbene Emulsion noch ca 15—20 Minuten nach.

Die Zubereitung ist chemisch und anwendungstechnisch stabil.

### Beispiel 6

20 Gew.-% Ethyl-2-(4-(6-chlor-2-benzthiazoyloxy)-phenoxypropanoat werden unter Rühren bei

40—45°C in 36 Gew.-% Xylol gelöst und mit 4 Gew.-% des Kaliumsalzes des phosphorylierten Ethylenoxid-Propylenoxid-Ethylenoxid-Blockcopolymeren der Formel I, n = o mit einem Gesamtanteil von 60% Ethylenoxid und 2 Gew.-% des Triäthanolamin-Salzes eines phosphorylierten Polystyrylphenyl-polyethylenoxids sowie 4 Gew.-% Dodecylbenzolsulfonsaurem Calcium versetzt.

In 25 Gew.-% Wasser werden bei Raumtemperatur 9 Gew.-% Ethylenglykol gelöst. Zu dieser wäßrigen Lösung läßt man unter starkem Rühren mit einem Flügelrührer die obengenannte organische Phase fließen und rührt die entstandene weiße Emulsion nach ca. 15 Minuten bei Raumtemperatur nach. Eine Probe wird 3 Monate bei 50°C gelagert. Die Zubereitung ist chemisch und anwendungstechnisch stabil.

Beispiel 7

35 Gew.-% 2,6-Dinitro-4-trifluormethyl-N,N-dipropylanilin-(Trifluralin) werden unter Rühren bei 20—25°C in 20 Gew.-% Xylol gelöst und mit 3 Gew.-% des Triethanolamin-Salzes des phosphorylierten Ethylenoxid-Propylenoxid-Ethylenoxid-Blockcopolymerisates der Formel I (mit 55% Ethylenoxid) und 2 Gew.-% des Triethanolamin-Salzes eines phosphorylierten Polystyrylphenyl-polyethylenoxids sowie 3 Gew.-% Fettsäurepolyglykolester (36 AeO) versetzt. In 31 Gew.-% Wasser werden bei Raumtemperatur 6 Gew.-% Polypropylenglykol (Mol.-Gew. 500) gelöst. Zu dieser wäßrigen Lösung läßt man unter starkem Rühren langsam die organische Phase fließen und rührt die entstandene gelbe Emulsion noch ca. 20—25 Minuten nach, bis sich der hellgelbe Farbton der Emulsion nicht mehr verändert. Die Zubereitung ist auch nach Lagerung bei verschiedenen Temperaturen anwendungstechnisch und chemisch stabil.

**Patentansprüche**

1. Pflanzenschutzmittel auf der Basis von wäßrigen Emulsionen, die einen oder mehrere Wirkstoffe enthalten, dadurch gekennzeichnet, daß sie als Dispergiermittel ein Blockcopolymerisat der Formel I

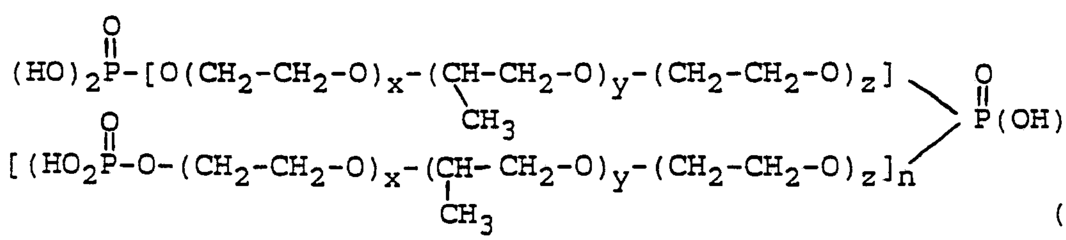

(I)

worin x und z unabhängig voneinander eine Zahl von 30 bis 100, y eine Zahl von 2 bis 200 und m, n = 0, 1 oder 2 bedeuten, wobei die Summe n + m = 2 sein muß, enthalten.

2. Mittel nach Anspruch 1, dadurch gekennzeichnet, daß in Formel (I) x und z gleiche Bedeutung besitzen, y eine Zahl von 20 bis 100 und n die Zahl Null bedeuten.

3. Mittel gemäß einem der Ansprüche 1 oder 2, dadurch gekennzeichnet, daß sie
5 — 60 Gew.-% Wirkstoff,
10 — 90 Gew.-% Wasser,
0,5 — 20 Gew.-% einer Verbindung der Formel 1 und übliche Zusatzstoffe enthalten.

4. Mittel gemäß einem oder mehreren der Ansprüche 1 bis 3, dadurch gekennzeichnet, daß sie zusätzlich einen oder mehreren der folgenden Zusatzstoffe enthalten:
5 — 50 Gew.-% Antigefriermittel,
1 — 10 Gew.-% Dispergiermittel,
1 — 15 Gew.-% Emulgator,
1 — 10 Gew.-% Verdickungsmittel,
oder 1 — 30 Gew.-% organisches Lösungsmittel.

5. Mittel gemäß einem oder mehreren der Ansprüche 1 bis 4, dadurch gekennzeichnet, daß sie als Wirkstoff ein Herbizid aus der Gruppe der Phenoxyphenoxy- oder Heteroaryloxyphenoxypropionsäurealkylester, der Dinitroanilinverbindungen, der Hydroxybenzonitril-derivate oder der Dinitrophenylverbindungen oder ein Inektizid aus der Gruppe Endosulfan, Binapacryl, der Phosphorsäureester oder der Pyrethroide oder ein Fungizid wie Pyrazophos oder ein Pheromon oder ein Repellent enthalten.

6. Mittel gemäß einem oder mehreren der Ansprüche 1 bis 5, dadurch gekennzeichnet, daß sie als Wirkstoff eine Verbindung aus der Gruppe Diclofopmethyl, Fenoxpropethyl, Trifluralin, Isopropalin, 2,6-Dibrom-4-hydroxybenzonitril-octanat, Dinoterb, Endosulfan, Binapacryl, Triazophos, Deltamethrin, Pyrazophos, Phthalsäuredimethylester, (E)-8-(E)-10-Dodecadienol oder (Z)-7,8-Epoxy-2-methyl-octadecan enthalten.

**Revendications**

1. Produits phytosanitaires à base d'émulsions aqueuses, qui contiennent une ou plusieurs substances

actives, produits caractérisés en ce qu'ils contiennent, comme dispersant, un copolymère à blocs ou longues séquences répondant à la formule I:

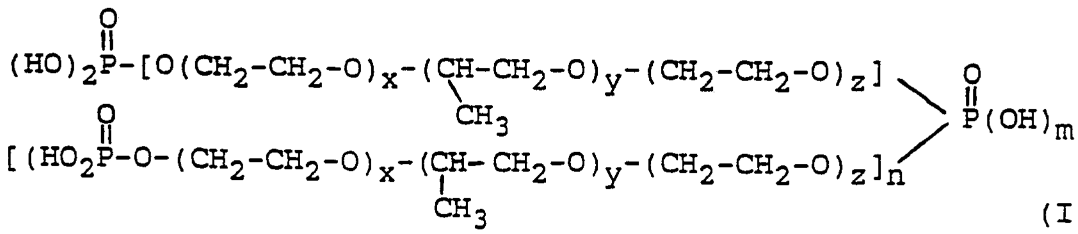

(I)

dans laquelle x et z représentent chacun, indépendamment l'un de l'autre, un nombre valant 30 à 100; y est un nombre valant 2 à 200 et les nombres et n valent chacun 0, 1 ou 2, la somme (n + m) devant valoir 2.

2. Produits selon la revendication 1, caractérisés en ce que, dans la formule (I), x et z sont des nombres de même valeur, y et un nombre valant 20 à 100 et n est nul.

3. Produits selon l'une des revendications 1 et 2, caractérisés en ce qu'ils contiennent:
5 à 60% en poids de la substance active,
10 à 90% en poids d'eau,
0,5 à 20% en poids d'un composé de formule I, et des additifs usuels.

4. Produits selon une ou plusieurs des revendications 1 à 3, caractérisés en ce qu'ils contiennent en outre un ou plusieurs des additifs suivants:
5 à 50% en poids d'un antigel,
1 à 10% en poids d'un dispersant,
1 à 15% en poids d'un émulsifiant,
1 à 10% en poids d'un épaississant, ou
1 à 30% en poids de solvant organique.

5. Produits selon une ou plusieurs des revendications 1 à 4, caractérisés en ce qu'ils contiennent comme substance active un herbicide du groupe des esters alkyliques d'un acide phénoxyphénoxypropionique et hétéroaryloxyphénoxypropionique, des composés de type dinitroaniline, des dérivés de l'hydroxybenzonitrile ou des composés dinitrophényliques ou bien un insecticide choisi parmi l'endosulfan, le binapacryl, les esters d'acide phosphorique ou les pyréthrinoïdes ou un fongicide comme pyrazophos ou une phéromone ou un répulsif.

6. Produits selon une ou plusieurs des revendications 1 à 5, caractérisés en ce qu'ils contiennent comme substance active un composé du groupe diclofopméthyl, fénoxapropéthyl, trifluraline, isopropalin, l'octanoate de dibromo-2,6 hydroxy-4 benzonitrile, le dinoterbe, l'endosulfan, le binapacryl, le triazophos, la deltaméthrine, le pyrazophos, du phtalate de diméthyle, le dodécadiénol-(E)-8-(E)-10 ou l'époxy (Z)-7,8 méthyl-2 octadécane.

## Claims

1. A plant protection agent based on aqueous emulsions containing one or more active compounds, wherein the dispersing agent used is a block copolymer of the formula I

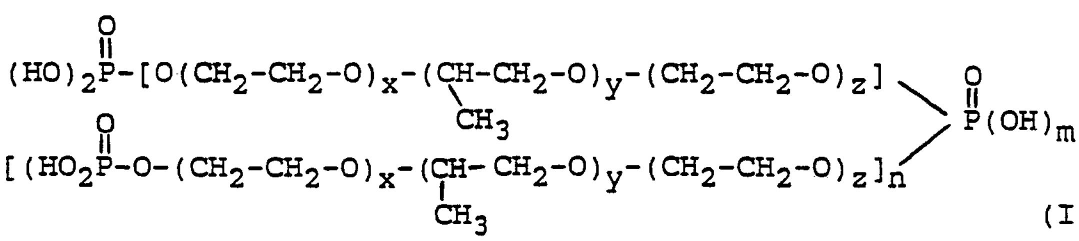

(I)

in which x and z independently of one another denote a number from 30 to 100, y denotes a number from 2 to 200 and m and n denote 0, 1 or 2, it being necessary for the sum of n + m to be 2.

2. An agent as claimed in claim 1, wherein, in the formula (I), x and z have the same meaning, y denotes a number from 20 to 100 and n denotes zero.

3. An agent as claimed in one of claims 1 or 2, which contains:
5 — 60% by weight of active compound,
10 — 90% by weight of water,
0.5 — 20% by weight of a compound of the formula I and customary additives.

4. An agent as claimed in one or more of claims 1 to 3, which contains, in addition, one or more of the following additives:
5 — 50% by weight of anti-freezing agent,

1 — 10% by weight of dispersing agent,
1 — 15% by weight of emulsifier,
1 — 10% by weight of thickener or
1 — 30% by weight of organic solvent.

5. An agent as claimed in one or more of claims 1 to 4, which contains, as the active compound, a herbicide belonging to the group comprising alkyl phenoxyphenoxypropionates or alkyl heteroaryloxyphenoxypropionates, dinitroaniline compounds, hydroxybenzonitrile derivatives or dinitrophenyl compounds, or an insecticide belonging to the group comprising endosulfan, binapacryl, phosphoric acid esters or pyrethroids, or a fungicide, such as pyrazophos, or a pheromone or a repellent.

6. An agent as claimed in one or more of claims 1 to 5, which contains, as the active compound, a compound belonging to the group comprising diclofopmethyl, fenoxapropethyl, trifluoralin, isopropalin, 2,6-dibromo-4-hydroxybenzonitrile octanoate, dinoterb, endosulfan, binapacryl, triazophos, deltamethrin, pyrazophos, dimethyl phthalate, (E)-8-(E)-10-dodecadienol or (Z)-7,8-epoxy-2-methyloctadecane.